# EUROPEAN PATENT SPECIFICATION

(11) **EP 0 637 528 B1**
(45) Date of publication and mention of the grant of the patent: **19.11.1997**
(21) Application number: 94112203.8
(22) Date of filing: 04.08.1994
(51) Int. Cl.: B60R 25/04

(54) **Control device for a vehicle antitheft system**
Steuerungsgerät für eine Kraftfahrzeug-Anti-Diebstahlvorrichtung
Appareil de commande pour un système antivol de véhicule

(30) Priority: 06.08.1993 IT TO930589
(43) Date of publication of application: 08.02.1995
(73) Proprietor: MAGNETI MARELLI S.p.A., 20145 Milano (IT)
(72) Inventor: Matteucci, Daniele, I-40100 Bologna (IT); Tegoni, Enrico, I-40137 Bologna (IT)
(74) Representative: Prato, Roberto

(56) References cited:
- EP-A- 0 392 411
- WO-A-88/06110
- FR-A- 2 592 347
- US-A- 4 477 874
- US-A- 4 754 255

## Description

The present invention relates to a control device for a vehicle antitheft system, particularly for cars featuring an electronic engine control system.

Systems of the aforementioned type currently installed on motor vehicles are known to comprise an electronic control system for enabling operation of the engine on receiving a user code; an anti theft device for receiving the user code and transmitting it to the control system; and a user code transmitter carried by the user. Failing reception of the correct user code, the control system prevents the engine from being started.

An example of the aforementioned vehicle anti theft system is described in the France patent application FR 2592347. The vehicle anti theft system described in FR 2592347 comprises a user code transmitter carried by the user and a keyboard placed inside the vehicle for transmitting the user code to the vehicle antitheft system in case of fault of the user code transmitter.

A major drawback of the above system is the difficulty encountered by the control system manufacturer in effecting checks and measurements of the control system for lack of the user code.

A solution for correcting the above mentioned drawback has already been proposed in the PCT patent application WO 8806110. The generic anti-theft vehicle system described in WO 8806110 comprises a keyboard placed inside the vehicle for transmitting the user code to the vehicle anti theft system. Moreover, the keyboard comprises a key for enabling a "service mode" to enable the vehicle to be used by other people whilst being serviced or driven in a car park without those people having to know the driver's input code. Whether the engine is already enabled (that is the user code is already transmitted by the driver) and the service mode key is depressed, the anti-theft vehicle system is disabled until another key in the keyboard is depressed. When the anti-theft vehicle system is disabled, the engine can be start only using the ignition key.

The system proposed by the PCT patent application WO 8806110 does not allow the control system manufacturer to do checks and measurements of all the features of the control system for lack of the user code, for example the control system manufacturer can not check the enabling/disabling process of the engine without the user code.

It is an object of the present invention to provide a control device for a vehicle antitheft system, enabling startup of the engine by the control system manufacturer even without the user code, without the aforementioned drawbacks.

Further aims and advantages of the present invention will be disclosed in the following description.

According to the present invention, there is provided a control device for a vehicle anti theft system as set forth in claim 1.

A preferred, non-limiting embodiment of the present invention will be described by way of example with reference to the accompanying drawings, in which:
Figure 1 shows a block diagram of an antitheft system in accordance with the teachings of the present invention;
Figure 2 shows an operational flow chart of the Figure 1 system.

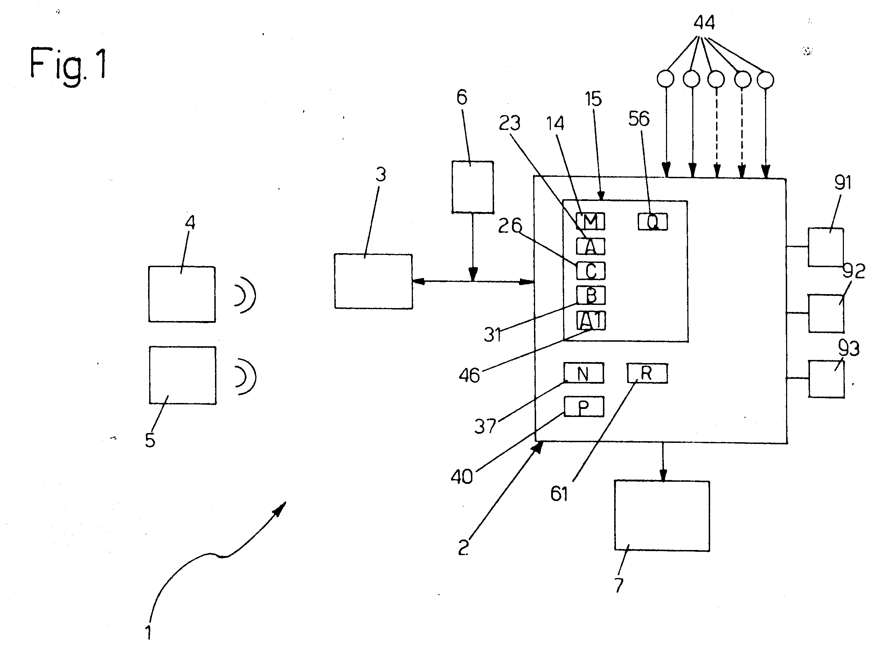

Number 1 in Figure 1 indicates a vehicle antitheft system, particularly for motor vehicles.

System 1 comprises:
an electronic control system 2 for enabling operation of the engine on receiving a user code "A", a fitter code "B", or a maker code "C";
an on-vehicle antitheft device 3 presenting a signal receiver connected to control system 2;
a code "A" transmitter 4 for the user;
a code "B" transmitter 5 for the fitter of system 1 to the vehicle;
a device 6 for the maker of control system 2, and connectable to control system 2 for transmitting code "C"; and
a display 7 connected to control system 2 and fitted to the vehicle dashpanel.

Transmitters 4 and 5 may consist of electromagnetic wave generators or electronic keys; and control system 2 is a self-deactivating type.

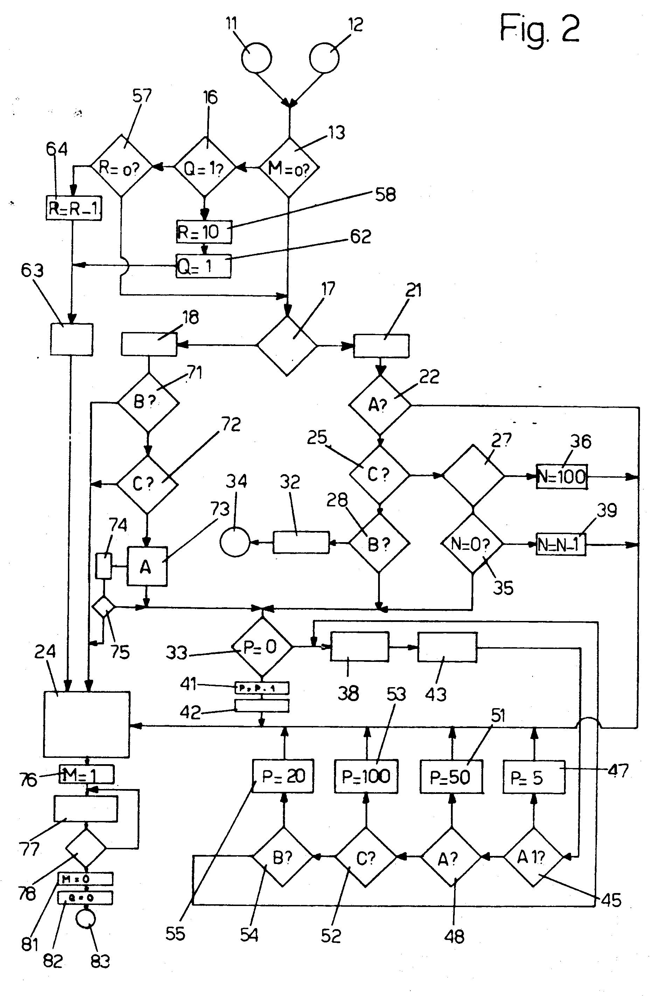

With reference to Figure 2, the operational flow chart of system 1 comprises two start blocks 11 and 12, the first relative to electrical connection of control system 2, e.g. by means of the ignition key, and the second of which is the output block of a procedure, within control system 2, for initializing system 2 following an internal error. Blocks 11 and 12 go on to block 13 which determines whether a quantity "M" in cell 14 of memory 15 of control system 2 (Figure 1) presents a "0" or "1" value. If "M" equals "1", block 13 goes on to block 16; conversely, block 13 goes on to block 17 which determines whether code "A" has ever been "seen", i.e. whether control system 2 is newly installed, or has already performed an engine startup enabling procedure based on recognition of code "A". If control system 2 is newly installed, block 17 goes on to block 18; conversely, block 17 goes on to block 21 in which control system 2 requests two-time transmission of a code by the electric blocks connected to it. The code may be "A" or "B", in which case it is transmitted to control system 2 by device 3, or "C", in which case it is transmitted by device 6. Upon control system 2 receiving two identical codes within a predetermined time, block 21 goes on to block 22 which determines whether the code received is the user code "A" stored in cell 23 of memory 15. In the event of a positive response, block 22 goes on to block 24. Conversely, block 22 goes on to block 25 which determines whether the code received is the maker code "C" stored in cell 26 of memory 15.

In the event of a positive response, block 25 goes on to block 27. Conversely, block 25 goes on to block 28 which determines whether the code received is the fitter code "B" stored in cell 31 of memory 15. In the event of a positive response, block 28 goes on to block 32; conversely, block 28 goes on to block 33. Block 32 provides for activating an engine startup lock procedure within control system 2, which procedure may only be exited, as shown schematically by block 34, by removing the ignition key. Block 32 also provides for a character display on display 7, indicating the engine lock condition defined in block 32 by the above procedure. Block 27 determines whether code "C" has ever been "seen", i.e. whether control system 2 is at the maker's disposal for setup or maintenance purposes. In the event control system 2 has already performed an engine enabling procedure based on recognition of code "C", block 27 goes on to block 35; conversely, block 27 goes on to block 36.

Block 36 commands a reference quantity "N" in counter 37 of control system 2 to assume a discrete value of, say, "100", and then goes on to block 24; and block 35 determines whether reference quantity "N" presents a "0" value. In the event of a positive response, block 35 goes on to block 33. Conversely, block 35 goes on to block 39 which decreases the value of quantity "N" by one unit, and then goes on to block 24.

Block 33 determines whether a reference quantity "P", the value of which is stored in counter 40 of control system 2, presents a "0" value. In the event of a positive response, block 33 goes on to block 38. Conversely, block 33 goes on to block 41 which decreases the present value of quantity "P" by one unit, and then goes on to block 42 and from there to block 24. Block 42 provides, on display 7, for a character display indicating counter 40, and for a user indication of the value of quantity "P". Block 38 provides for activating an engine startup lock procedure, within control system 2, which procedure may only be exited, as shown schematically by block 43, by the user twice performing a series of events which control system 2 identifies as corresponding to code "A", part "A1" of code "A", code "B" or code "C". Such events may be a combination of a number of operations of the brake pedal, a number of turn-on operations of electrical components such as the headlights, etc., which are detected by control system 2 by means of a number of sensors 44 (Figure 1) and converted internally into an operating code. Block 38 also provides for a character display on display 7, indicating the engine lock condition defined in block 38 by the above procedure. Part "A1" of user code "A" is a code which the owner of the vehicle may reveal to anyone borrowing the vehicle, so that operation of the engine may be enabled (a limited number of times) by the borrower in the event of a fault on antitheft device 3.

Block 43 goes on to block 45 which determines whether the operating code matches part "A1" of user code "A" stored in cell 46 of memory 15. In the event of a positive response, block 45 goes on to block 47; conversely, block 45 goes on to block 48. Block 47 commands reference quantity "P" in counter 40 of control system 2 to assume a discrete value of, say, "5", and then goes on to block 24. Block 48 determines whether the operating code matches user code "A". In the event of a positive response, block 48 goes on to block 51; conversely, block 48 goes on to block 52. Block 51 commands reference quantity "P" in counter 40 of control system 2 to assume a discrete value of, say, "50", and then goes on to block 24.

Block 52 determines whether the operating code matches maker code "C". In the event of a positive response, block 52 goes on to block 53; conversely, block 52 goes on to block 54. Block 53 commands reference quantity "P" in counter 40 of control system 2 to assume a discrete value of, say, "100", and then goes on to block 24. Block 54 determines whether the operating code matches fitter code "B". If it does, and code "A" has not yet been memorized, block 54 goes on to block 55; conversely, block 54 goes back to block 38. Block 55 commands reference quantity "P" in counter 40 of control system 2 to assume a discrete value of, say, "20", and then goes on to block 24.

Block 16 determines whether a quantity "Q" in cell 56 of memory 15 of control system 2 (Figure 1) presents a "0" or "1" value. If "Q" equals "1", block 16 goes on to block 57. Conversely, if "Q" equals "0", block 16 goes on to block 58 which commands a reference quantity "R" in counter 61 of control system 2 to assume a discrete value of, say, "10". Block 58 then goes on to block 62 which commands quantity "Q" in cell 56 to assume a "1" value, and provides for a character display on display 7 indicating (as described in more detail later on) startup of the engine following abnormal disconnection of control system 2, i.e. other than by withdrawal of the ignition key. Block 62 then goes on to block 63 and from there to block 24. Block 63 provides, on display 7, for a character display indicating counter 61, and for a user indication of the value of quantity "R".

Block 57 determines whether reference quantity "R" presents a "0" value, and, in the event of a positive response, goes on to block 17. Conversely, block 57 goes on to block 64 which decreases the value of quantity "R" by one unit and then goes on to block 63.

In block 18, control system 2 requests two-time transmission of a code by the electric blocks connected to it. The code may be "A" or "B", in which case it is transmitted to control system 2 by device 3, or "C", in which case it is transmitted by device 6. Upon control system 2 receiving two identical codes within a predetermined time, block 18 goes on to block 71 which determines whether the code received is the fitter code "B" already memorized. In the event of a positive response, block 71 goes on to block 24. Conversely, block 71 goes on to block 72 which determines whether the code received is the maker code "C" already memorized. In the event of a positive response, block 72 goes on to block 24. Conversely, block 72 goes on to block 73 in which the received code is assumed as user code "A", and which then goes on to block 74 which provides for storing user code "A" in cell 23 and part "A1" of code "A" in cell 46. Block 74 then goes on to block 75 which determines correct or incorrect storage of user code "A" and part "A1" of code "A". In the case of correct storage, block 75 goes on to block 24; conversely, block 75 goes on to block 33. In block 24, control system 2 activates its internal blocks preparatory to starting the vehicle engine, and also provides for a character display on display 7 indicating the engine startup enabling condition. Block 24 then goes on to block 76 which commands quantity "M" to assume a "1" value, and then goes on to engine control procedure block 77. During operation of the engine, and every predetermined number of engine cycles, block 77 goes on to block 78 which controls the position of the ignition key. If the key is withdrawn or set by the user to the off position, block 78 goes on to block 81. Conversely, if the key is set by the user to the on position, block 78 goes back to block 77 which continues controlling the engine. Block 81 commands quantity "M" to assume a "0" value, and then goes on to block 82 which in turn commands quantity "Q" to assume a "0" value and then goes on to block 83 in which control system 2 determines the most appropriate time to deactivate automatically.

Blocks 32 and 38 provide for taking the necessary steps for preventing startup of the engine, such as (Figure 1) disabling fuel pump control member 91, and disabling control of electronic fuel injection system 92 and electronic ignition system 93. Block 24 presents a procedure for determining whether the received code is code "B", in which case, a procedure for limiting output of the engine is activated in block 77; and an internal procedure for preventing startup by code "B" when quantity "P" exceeds the discrete value established in block 55.

In actual use, the owner of the vehicle is provided with transmitter 4 and informed of the series of events to be performed on the vehicle for defining the combination of events corresponding to code "A" and to part "A1" of code "A", so that the engine may be started a limited number of times by the owner in the event of a fault on device 3. If the vehicle is loaned, the owner may disclose only part "A1" of code "A" to enable the borrower, in the event of a fault on device 3, to start the engine a limited number of times, less than the number permitted using code "A". The fitter of system 1, on the other hand, is provided with transmitter 5 and informed of the series of events to be performed on the vehicle for defining the combination of events corresponding to code "B", so that the engine may be started, albeit at reduced power, by the fitter. This feature is particularly useful for vehicle manufacturers in that it enables system 1 to be installed at the end of the production line and the vehicle to be transferred to the parking lot and loaded on to the carrier for transfer to the dealer. As shown clearly in the operational flow chart of system 1, code "B" cannot be used to start the engine once code "A" has been memorized. In actual use, the maker of control system 2 defines a code "C" for each system 2, is provided with a device 6 for transmitting it to system 2, and knows the series of events to be performed on the vehicle for defining the combination of events corresponding to code "C". The Figure 2 chart thus presents a control device (blocks 25, 27, 36, 35, 39, 52, 53, 71) permitting the maker of control system 2 not only to produce and safely test system 1, but also to carry out any maintenance or repair work.

In the event the engine is turned off, not by withdrawing the ignition key, but by interrupting the engine control procedure in block 77, system 1 permits the engine to be started up again with no code request being made. In other words, quantity "M" indicates the manner in which control system 2 is deactivated when the engine is turned off. To prevent a code being requested for initializing control system 2 when the engine is turned off abnormally, startup of the engine is permitted when quantity "M" assumes a "1" value. By means of quantity "Q" and when "M" = "1", system 1 permits startup of the engine a limited number of times, to prevent control system 2 from being deactivated voluntarily by turning off the engine abnormally, and to prevent control system 2 from being connected to the electric supply circuit by tampering with- the electric connections. Moreover, the information supplied to display 7 is memorized for providing an operating log of system 1.

The advantages of the present invention are as follows.

In particular, it provides for enabling startup of the engine by four users, each with a respective code. The owner of the vehicle is permitted to start the engine any number of times using transmitter 4, and a limited number of times by means of a combination of events representing code "A". Anyone borrowing or hiring the vehicle is permitted to start the engine a limited number of times by means of a combination of events representing part "A1" of code "A". The fitter of system 1 is permitted to start the engine a limited number of times ("P" = "20") using transmitter 5, if code "A" has not yet been memorized; to start the engine a limited number of times by means of a combination of events representing code "B", if code "A" has not yet been memorized; and also to start the engine at reduced power. If code "A" has already been memorized, the maker of control system 2 is permitted to start the engine a limited number of times by means of both device 6 and a combination of events representing code "C". Finally, the engine may also be started up a limited number of times in the event the engine is turned off abnormally.

Clearly, therefore, system 1 only permits startup of the engine by means of transmitter 4 or a startup code. And even in the event confidential code "B" or "C" should become known, these only permit startup of the engine a limited number of times, which is a strong deterrent against theft of the vehicle. Finally, all the information relative to engine turn-off, specific operating conditions of system 1, and the limited number of engine startups by means of a combination of events or following abnormal turn-off of the engine, are shown on display 7 and memorized in control system 2.

Clearly, changes may be made to the control device and system 1 as described and illustrated herein without departing from the scope of the appended claims. For example, light signals may be used for indicating turn-off of the engine and specific operating conditions of system 1.

## Claims

1. A control device for a vehicle antitheft system, particularly for vehicles featuring an electronic engine control system (2), comprising:
a first block (23) in which a first code (A) is stored;
a first transmitter (4) for the vehicle owner, for generating a signal representing said first code (A);
a receiver (3) connected to and for supplying incoming signals to said control system (2);
means for comparing the signal received by said receiver (3) with said first code (A);
means for enabling startup of the engine when the signal received by said receiver (3) matches said first code (A);
means for disabling startup of the engine when the signal received by said receiver (3) fails to match said first code (A);
a second block (26) in which a second code (C) is stored;
a device (6) for generating a signal representing said second code (C);
means for comparing the signal supplied by said device (6) with said second code (C);
means for enabling startup of the engine when the signal supplied by said device (6) matches said second code (C);
and means for disabling startup of the engine when the signal supplied by said device (6) fails to match said second code (C),
characterized in that said device (6) can be used only by the maker of said control system (2) for enabling startup of the engine a limited number of times when said vehicle antitheft system is in setup or maintenance condition.

2. A device as claimed in Claim 1, characterized in that it comprises a number of sensors (44) for detecting a series of events effected by the user on internal parts of the vehicle; means for converting said series of events into an operating code; means for comparing said operating code with said second code (C); means for enabling startup of the engine when said operating code matches said second code (C); means for disabling startup of the engine when said operating code fails to match said second code (C); and means for limiting the number of times startup of the engine may be enabled by said operating code matching said second code (C).

3. A device as claimed in Claim 2, characterized in that it comprises means for displaying, on a display (7), the number of times startup of the engine may be enabled by said operating code matching said second code (C).

4. A device as claimed in Claim 2 and/or 3, characterized in that it comprises means for comparing said operating code with said first code (A); means for enabling startup of the engine when said operating code matches said first code (A); means for disabling startup of the engine when said operating code fails to match said first code (A); and means for limiting the number of times startup of the engine may be enabled by said operating code matching said first code (A).

5. A device as claimed in Claim 4, characterized in that it comprises means for displaying, on a display (7), the number of times startup of the engine may be enabled by said operating code matching said first code (A).

6. A device as claimed in Claim 4 and/or 5, characterized in that it comprises:
a third block (46) in which part (A1) of said first code (A) is stored;
means for comparing said operating code with said part (A1) of said first code (A);
means for enabling startup of the engine when said operating code matches said part (A1) of said first code (A);
means for disabling startup of the engine when said operating code fails to match said part (A1) of said first code (A); and
means for limiting the number of times startup of the engine may be enabled by said operating code matching said part (A1) of said first code (A).

7. A device as claimed in Claim 6, characterized in that it comprises means for displaying, on a display (7), the number of times startup of the engine may be enabled by said operating code matching said part (A1) of said first code (A).

8. A device as claimed in at least one of the foregoing Claims from 2 to 7, characterized in that it comprises:
a fourth block (31) in which a third code (B) is stored;
a second transmitter (5) for the fitter of said system to the vehicle, for generating a signal representing said third code (B);
means for comparing the signal received by said receiver (3) with said third code (B);
means for enabling startup of the engine a limited number of times when the signal received by said receiver (3) matches said third code (B), and providing said first code (A) has not yet been memorized in said first block (23); and
means for disabling startup of the engine when the signal received by said receiver (3) fails to match said third code (B).

9. A device as claimed in Claim 8, characterized in that it comprises means for low-power control of the engine, when the signal received by said receiver (3) matches said third code (B), and providing said first code (A) has not yet been memorized in said first block (23).

10. A device as claimed in Claim 8, characterized in that it comprises means for comparing said operating code with said third code (B); means for enabling startup of the engine when said operating code matches said third code (B); means for disabling startup of the engine when said operating code fails to match said third code (B); and means for limiting the number of times startup of the engine may be enabled by said operating code matching said third code (B).

11. A device as claimed in Claim 10, characterized in that it comprises means for controlling the engine at a predetermined speed when said operating code matches said third code (B).

12. A device as claimed in Claim 11, characterized in that it comprises means for displaying, on a display (7), the number of times startup of the engine may be enabled by said operating code matching said third code (B).

13. A device as claimed in at least one of the foregoing Claims, characterized in that it comprises means for detecting abnormal turn-off of the engine; and means enabling startup of the engine a limited number of times in the event of abnormal turn-off of the engine.

14. A device as claimed in Claim 13, characterized in that it comprises means for displaying, on a display (7), the number of times startup of the engine may be enabled in the event of abnormal turn-off of the engine.

15. A device as claimed in the foregoing Claims, characterized in that it comprises means for providing the user with information relative to engine startup enabling and disabling conditions; and means for storing all the displayed information.

## Patentansprüche

1. Steuervorrichtung für ein Kraftfahrzeug-Antidiebstahl-System, insbesondere für Fahrzeuge mit einem elektronischen Motorsteuersystem (2), umfassend:
einen ersten Block (23), in dem ein erster Code (A) gespeichert ist;
einen ersten Sender (4) für den Kraftfahrzeugbesitzer zur Erzeugung eines Signals, das den ersten Code (A) repräsentiert;
einen Empfänger (3), der mit dem Steuersystem (2) verbunden ist und für die Zuführung der ankommenden Signale zum Steuersystem (2) dient;
eine Einrichtung zum Vergleich des vom Empfänger (3) empfangenen Signals mit dem ersten Code (A);
eine Einrichtung zum Freigeben des Starts des Motors, wenn das vom Empfänger (3) empfangene Signal mit dem ersten Code (A) übereinstimmt;
eine Einrichtung zum Sperren des Startens des Motors, wenn das vom ersten Empfänger (3) empfangene Signal mit dem ersten Code (A) nicht übereinstimmt;
einen zweiten Block (26), in dem ein zweiter Code (C) gespeichert ist;
eine Vorrichtung (6) zur Erzeugung eines den zweiten Code(C) repräsentierenden Signals;
eine Einrichtung zum Vergleichen des von der Vorrichtung (6) zugeführten Signals mit dem zweiten Code (C);
eine Einrichtung zur Freigabe des Starts des Motors, wenn das von der Vorrichtung (6) zugeführte Signal mit dem zweiten Code (C) übereinstimmt;
und eine Einrichtung zum Sperren des Startens des Motors, wenn das von der Vorrichtung (6) zugeführte Signal nicht mit dem zweiten Code (C) übereinstimmt,
**dadurch gekennzeichnet, daß** die Vorrichtung (6) nur vom Hersteller des Steuersystems (2) zur Freigabe des Starts des Motors für eine begrenzte Anzahl von Male verwendet werden kann, wenn das KraftfahrzeugAntidiebstahl-System sich m einem Einstell- oder Wartungszustand befindet.

2. Vorrichtung nach Anspruch 1, **dadurch gekennzeichnet, daß** sie umfaßt eine Anzahl von Sensoren (44) zum Erfassen einer Reihe von Ereignissen, die vorn Benutzer an internen Bauteilen des Kraftfahrzeuges bewirkt werden; eine Einrichtung zum Konvertieren dieser Reihe von Ereignissen in einen Betätigungcode; eine Einrichtung zum Vergleichen des Betätigungscodes mit dem zweiten Code (C); eine Einrichtung zum Freigabe des Startens des Motors, wenn der Betätigungscode mit dem zweiten Code (C) übereinstimmt; eine Einrichtung zum Sperren des Startens des Motors, wenn der Betätigungscode mit dem zweiten Code (C) nicht übereinstimmt und eine Einrichtung zum Begrenzen der Anzahl von Male, für die ein Starten des Motors freigegeben werden kann, indem der Betätigungscode mit dem zweiten Code (C) übereinstimmt.

3. Vorrichtung nach Anspruch 2, **dadurch gekennzeichnet, daß** es eine Einrichtung zur Sichtbarmachung der Anzahl von Male auf einer Anzeige (7) umfaßt, wie oft ein Starten der Maschine freigegeben werden kann, indem der Betätigungscode mit dem zweiten Code (C) übereinstimmt.

4. Vorrichtung nach Anspruch 2 und/oder 3, **dadurch gekennzeichnet, daß** sie umfaßt eine Einrichtung zum Vergleich des Betätigungscodes mit dem ersten Code (A); eine Einrichtung zur Freigabe des Startens des Motors, wenn der Betätigungscode mit dem ersten Code (A) übereinstimmt; eine Einrichtung zum Sperren des Startens des Motors, wenn der Betätigungscode mit ersten Code (A) nicht übereinstimmt; und eine Einrichtung zum Begrenzen der Anzahl von Male, für die ein Starten des Motors freigegeben werden kann, indem der Betätigungscode mit dem ersten Code (A) übereinstimmt.

5. Vorrichtung nach Anspruch 4, **dadurch gekennzeichnet, daß** sie eine Einrichtung zur Darstellung der Anzahl von Male auf einer Anzeige (7) umfaßt, für die ein Starten des Motors freigegeben werden kann, indem der Betätigungscode mit dem ersten Code (A) übereinstimmt.

6. Vorrichtung nach Anspruch 4 und/oder 5, **dadurch gekennzeichnet, daß** sie umfaßt:
einen dritten Block 46, in dem ein Teil (A1) des ersten Codes (A) gespeichert ist;
eine Einrichtung zum Vergleichen des Betätigungscodes mit dem Teil (A1) des ersten Codes (A);
eine Einrichtung zur Freigabe des Startens des Motors, wenn der Betätigungscode mit dem Teil (A1) des ersten Codes (A) übereinstimmt;
eine Einrichtung zum Sperren des Startens des Motors, wenn der Betätigungscode mit dem Teil (A1) des ersten Codes (A) nicht übereinstimmt; und
eine Einrichtung zur Begrenzung der Anzahl von Male, für die ein Starten des Motors freigegeben werden kann, indem der Betätigungscode mit dem Teil (A1) des ersten Codes (A) übereinstimmt.

7. Vorrichtung nach Anspruch 6, **dadurch gekennzeichnet, daß** sie eine Einrichtung zur Darstellung der Anzahl von Male auf einer Anzeige (7) umfaßt, für die ein Starten des Motors beigegeben werden kann, indem der Betätigungscode mit dem Teil (A1) des ersten Codes (A) übereinstimmt.

8. Vorrichtung nach zumindest einem er vorgenannten Ansprüche 2 bis 7, **dadurch gekennzeichnet, daß** sie umfaßt:
einen vierten Block (31), in dem ein dritter Code (B) gespeichert ist;
einen zweiten Sender (5) für den Monteur des Systems am Fahrzeug zum Erzeugen eines Signals, das den dritten Code (B) repräsentiert;
eine Einrichtung zum Vergleichen des vom Empfänger (3) empfangenen Signals mit dem dritten Code (B);
eine Einrichtung zur Freigabe des Startens des Motors für eine begrenzte Anzahl von Male, wenn das vom Empfänger (3) empfangene Signal mit dem dritten Code (B) übereinstimmt und unter der Voraussetzung, daß der erste Code (A) im ersten Block 23 noch nicht gespeichert worden ist; und
eine Einrichtung zum Sperren des Startens des Motors, wenn das vom Empfänger (3) empfangene Signal mit dem dritten Code (B) nicht übereinstimmt.

9. Vorrichtung nach Anspruch 8, **dadurch gekennzeichnet, daß** sie eine Einrichtung zur Steuerung des Motors auf niedrige Leistung umfaßt, wenn das vom Empfänger (3) empfangene Signal mit dem dritten Code (B) übereinstimmt und unter der Voraussetzung, daß der erste Code (A) noch nicht im ersten Block (23) gespeichert worden ist.

10. Vorrichtung nach Anspruch 8, **dadurch gekennzeichnet, daß** es umfaßt eine Einrichtung zum Vergleichen des Betätigungscodes mit dem dritten Code (B); eine Einrichtung zur Freigabe des Startens des Motors, wenn der Betätigungscode mit dem dritten Code (B) übereinstimmt; eine Einrichtung zum Sperren des Startens des Motors, wenn der Betätigungscode nicht mit dem dritten Code (B) übereinstimmt; und eine Einrichtung zum Begrenzen der Anzahl von Male, für die ein Starten des Motors freigegeben werden kann, indem der Betätigungscode mit dem dritten Code (B) übereinstimmt.

11. Vorrichtung nach Anspruch 10, **dadurch gekennzeichnet, daß** sie eine Einrichtung zur Steuerung des Motors mit einer vorbestimmten Drehzahl umfaßt, wenn der Betätigungscode mit dem dritten Code (B) übereinstimmt.

12. Vorrichtung nach Anspruch 11, **dadurch gekennzeichnet, daß** sie eine Einrichtung zur Darstellung der Anzahl von Male auf einer Anzeige (7) umfaßt, für die ein Starten des Motors freigegeben werden kann, indem der Betätigungscode mit dem dritten Code (B) übereinstimmt.

13. Vorrichtung nach zumindest einem der vorgenannten Ansprüche, **dadurch gekennzeichnet, daß** sie eine Einrichtung zur Erfassung des abnormalen Abstellens des Motors und eine Einrichtung umfaßt, die das Starten des Motors für eine begrenzte Anzahl von Male freigibt für den Fall eines abnormalen Abstellens des Motors.

14. Vorrichtung nach Anspruch 13, **dadurch gekennzeichnet, daß** sie eine Einrichtung zur Darstellung der Anzahl von Male auf einer Anzeige (7) umfaßt, für die ein Startens des Motors im Falle eines abnormalen Abstellens des Motors freigegeben werden kann.

15. Vorrichtung nach einem der vorgenannten Ansprüche, **dadurch gekennzeichnet, daß** sie eine Einrichtung zur Versorgung des Benutzers mit Information bezüglich der Motor-Start-Freigabe- und Sperr-Zustände sowie eine Einrichtung zur Speicherung aller angezeigter Information umfaßt.

## Revendications

1. Un dispositif de commande pour un système antivol de véhicules notamment pour des véhicules comportant un système de commande de moteur électronique (2) comprenant :
- un premier bloc (23) dans lequel un premier code (A) est emmagasiné ;
- un premier émetteur (4) pour le propriétaire du véhicule pour générer un signal représentant ledit premier code (A) ;
- un récepteur (3) relié audit système de commande (2) et pour l'alimenter en signaux entrants ;
- un moyen pour comparer le signal reçu par ledit récepteur (3) avec ledit premier code (A) ;
- un moyen pour permettre le démarrage du moteur lorsque le signal reçu par ledit récepteur (3) est en accord avec ledit premier code (A) ;
- un moyen pour désactiver le démarrage du moteur lorsque le signal reçu par ledit récepteur (3) n'est pas en accord avec ledit premier code (A).
- un deuxième bloc (26) dans lequel un second code (C) est emmagasiné ;
- un dispositif (6) pour générer un signal représentant ledit deuxième code (C) ;
- un moyen pour comparer le signal alimenté par ledit dispositif (6) audit deuxième code (C) ;
- un moyen pour permettre le démarrage du moteur lorsque le signal alimenté par ledit dispositif (6) est en accord avec ledit deuxième code (C) ;
- et un moyen pour désactiver le démarrage du moteur lorsque le signal alimenté par ledit dispositif (6) n'est pas en accord avec ledit deuxième code (C),
caractérisé en ce que ledit dispositif (6) peut être utilisé seulement par le fabricant dudit système de commande (2) pour permettre le démarrage du moteur un nombre de fois limité lorsque ledit système antivol pour véhicules est dans un état d'entretien ou de réparation.

2. Un dispositif selon la revendication 1, caractérisé en ce qu'il comprend plusieurs capteurs (44) pour détecter une série d'événements effectués par l'utilisateur sur des parties internes du véhicule, un moyen pour transformer lesdites séries d'événements selon un code de fonctionnement, un moyen pour comparer ledit code de fonctionnement avec ledit deuxième code (C), un moyen pour permettre le démarrage du moteur lorsque ledit code de fonctionnement est en accord avec ledit deuxième code (C), un moyen pour désactiver le démarrage du moteur lorsque ledit code de fonctionnement n'est pas en accord avec ledit deuxième code (C) et des moyens pour limiter le nombre de démarrages du moteur pouvant être permis par ledit code de fonctionnement en accord avec ledit deuxième code (C).

3. Un dispositif selon la revendication 2, caractérisé en ce qu'il comprend un moyen pour l'affichage sur un dispositif d'affichage (7) du nombre de démarrages du moteur que peut permettre ledit code de fonctionnement en accord avec ledit deuxième code (C).

4. Un dispositif selon la revendication 2 et/ou la revendication 3 caractérisé en ce qu'il comprend un moyen pour comparer ledit code de fonctionnement avec ledit premier code (A), un moyen pour permettre le démarrage du moteur lorsque ledit code de fonctionnement est en accord avec ledit premier code (A), un moyen pour désactiver le démarrage du moteur lorsque ledit code de fonctionnement n'est pas en accord avec ledit premier code (A) et un moyen pour limiter le nombre de démarrages du moteur que peut permettre ledit code de fonctionnement en accord avec ledit premier code (A).

5. Un dispositif selon la revendication 4, caractérisé en ce qu'il comprend un moyen pour l'affichage sur un dispositif d'affichage (7) du nombre de démarrages du moteur que peut permettre ledit code de fonctionnement en accord avec ledit premier code (A).

6. Un dispositif selon la revendication 4 et/ou la revendication 5, caractérisé en ce qu'il comprend :
- un troisième bloc (46) dans lequel une partie (A1) dudit premier code (A) est emmagasinée,
- un moyen pour comparer ledit code de fonctionnement avec ladite partie (A1) dudit premier code (A),
- un moyen pour permettre le démarrage du moteur lorsque ledit code de fonctionnement est en accord avec ladite partie (A1) dudit premier code (A),
- un moyen pour désactiver le démarrage du moteur lorsque ledit code de fonctionnement n'est pas en accord avec ladite partie (A1) dudit premier code (A) et
- un moyen pour limiter le nombre de démarrages du moteur que peut permettre ledit code de fonctionnement en accord avec ladite partie (A1) dudit premier code (A).

7. Un dispositif selon la revendication 6 caractérisé en ce qu'il comprend un moyen pour afficher sur un dispositif d'affichage (7) le nombre de démarrages du moteur que permettre ledit code de fonctionnement en accord avec ladite partie (A1) dudit premier code (A).

8. Un dispositif selon l'une des revendications précédentes 2 à 7, caractérisé en ce qu'il comprend :
- un quatrième bloc (31) dans lequel un troisième code (B) est emmagasiné,
- un deuxième émetteur (5) pour l'utilisateur dudit système du véhicule pour générer un signal représentant ledit troisième code (B),
- un moyen pour comparer le signal reçu par ledit récepteur (3) avec ledit troisième code (B),
- un moyen pour permettre le démarrage du moteur selon un nombre de fois limité lorsque le signal reçu par ledit récepteur (3) est en accord avec ledit troisième code (B) et fournir ledit premier code (A) qui n'a pas été encore mémorisé dans ledit premier bloc (23), et
- un moyen pour désactiver le démarrage du moteur lorsque le signal reçu par ledit récepteur (3) n'est pas en accord avec ledit troisième code (B).

9. Un dispositif selon la revendication 8, caractérisé en ce qu'il comprend un moyen pour la commande à faible puissance du moteur lorsque le signal reçu par ledit récepteur (3) est en accord avec ledit troisième code (B) et fournir ledit premier code (A) qui n'a pas été encore mémorisé dans ledit premier bloc (23).

10. Un dispositif selon la revendication 8, caractérisé en ce qu'il comprend un moyen pour comparer ledit code de fonctionnement avec ledit troisième code (B), un moyen pour permettre le démarrage du moteur lorsque ledit code de fonctionnement est en accord avec ledit troisième code (B), un moyen pour désactiver le démarrage du moteur lorsque ledit code de fonctionnement n'est pas en accord avec ledit troisième code (B) et un moyen pour limiter le nombre de démarrages du moteur pouvant être permis par ledit code de fonctionnement en accord avec ledit troisième code (B).

11. Un dispositif selon la revendication 10, caractérisé en ce qu'il comprend un moyen pour commander le moteur à une vitesse prédéterminée lorsque ledit code de fonctionnement est en accord avec ledit troisième code (B).

12. Un dispositif selon la revendication 11, caractérisé en ce qu'il comprend un moyen pour afficher sur un dispositif d'affichage (7) le nombre de démarrages du moteur pouvant être permis par ledit code de fonctionnement en accord avec ledit troisième code (B).

13. Un dispositif selon l'une quelconque des revendications précédentes, caractérisé en ce qu'il comprend un moyen pour détecter un arrêt anormal du moteur et un moyen permettant le démarrage du moteur un nombre de fois limité dans le cas d'un arrêt anormal du moteur.

14. Un dispositif selon la revendication 13, caractérisé en ce qu'il comprend un moyen pour l'affichage sur un dispositif d'affichage (7) du nombre de démarrages du moteur pouvant être permis dans le cas d'un arrêt anormal du moteur.

15. Un dispositif selon l'une quelconque des revendications précédentes, caractérisé en ce qu'il comprend un moyen pour fournir à l'utilisateur des informations relatives aux conditions permettant ou empêchant le démarrage du moteur et un moyen pour emmagasiner toutes les informations affichées.
